## Europäisches Patentamt

## European Patent Office
## Office européen des brevets

(11) Veröffentlichungsnummer: **0 047 858**
**B1**

(12) **EUROPÄISCHE PATENTSCHRIFT**

(45) Veröffentlichungstag der Patentschrift:
28.09.83

(21) Anmeldenummer: 81106223.1

(22) Anmeldetag: 08.08.81

(51) Int. Cl.³: **B 60 R 7/06,** B 60 K 37/00

(54) Baueinheit für den Innenbereich eines Fahrzeuges.

(30) Priorität: **12.09.80 DE 3034431**

(43) Veröffentlichungstag der Anmeldung:
**24.03.82 Patentblatt 82/12**

(45) Bekanntmachung des Hinweises auf die Patenterteilung:
**28.09.83 Patentblatt 83/39**

(84) Benannte Vertragsstaaten:
**DE FR GB IT**

(56) Entgegenhaltungen:
**AUTOMOBILTECHNISCHE ZEITSCHRIFT, Nr. 82, März 1980 Stuttgart »Neue Innenausstattung für die Lancia-Beta-Limousine« Seite 148**

(73) Patentinhaber: **Gebr. Happich GmbH, Postfach 10 02 49 Clausenbrücke 1, D-5600 Wuppertal 1 (DE)**

(72) Erfinder: **Dietz, Günter, Eggenbruch 97, D-5600 Wuppertal 1 (DE)**
Erfinder: **Falkenroth, Heinz Jürgen, Körnerstrasse 8, D-5828 Ennepetal 1 (DE)**
Erfinder: **Grelle, Wolfgang, Nibelungenstrasse 7, D-5608 Radevormwald (DE)**
Erfinder: **Mahler, Gert, Kreuzstrasse 5, D-5608 Radevormwald (DE)**

(74) Vertreter: **Rehders, Jochen, c/o Fa. Gebr. Happich GmbH Postfach 10 02 49 Clausenbrücke 1, D-5600 Wuppertal 1 (DE)**

BUNDESDRUCKEREI BERLIN

Baueinheit für den Innenbereich eines Fahrzeuges

Die Erfindung bezieht sich auf eine Baueinheit der im Oberbegriff des Patentanspruchs 1 angegebenen Art.

Bei Kraftfahrzeugen wird häufig die Instrumententafel durch eine sich daran nach unten anschließende Konsole ergänzt, die sowohl zur Aufnahme weiterer Bedienungselemente, wie z. B. Gangschaltungshebel, Handbremse, Aschenbecher, Radio od. dgl. dient, als auch zumindest eine Ablageschale aufweist. Die Instrumententafel und die Konsole bilden dabei im allgemeinen eine durch Schrauben zusammengehaltene Baueinheit. Das Zusammenschrauben der Bauteile bedeuet in der Praxis einen relativ großen Aufwand sowohl in der Bauausführung als auch bei der Montage. So müssen in die, in der Regel im wesentlichen aus Kunststoffschaum gebildeten Bauteile Blechlaschen oder Blechwinkel eingesetzt und diese mit Gewindebohrung für die Befestigungsschrauben versehen werden, was die Herstellung kompliziert und verteuert. Aber auch die Montage bereitet häufig, insbesondere bei der Summierung von Toleranzfehlern erhebliche Schwierigkeiten, zumal das Auffinden der Gewindelöcher im allgemeinen ohne Sichtkontrolle durchgeführt werden muß.

Die der Erfindung zugrunde liegende Aufgabe besteht demgemäß darin, eine Baueinheit der im Oberbegriff des Anspruchs 1 angegebenen Art zu schaffen, die sich durch einen verringerten Bauaufwand und eine wesentliche einfachere Montierbarkit auszeichnen soll.

Die Lösung dieser Aufgabe ist im kennzeichnenden Teil des Anspruchs 1 angegeben.

Die besonderen Vorteile der Erfindung bestehen darin, daß zunächst keine in ihrer Lage aufeinander abgestimmte mit Gewindebohrungen versehene Blechlaschen od. dgl. in die Bauteile eingebracht werden müssen, wodurch die Herstellung vereinfacht, aber auch Gewicht eingespart wird. Weiterhin wird durch die Erfindung eine toleranzüberbrückende Verbindung zwischen der Instrumententafel und der Konsole erzielt. Durch das Verspannen der Konsole erübrigen sich Anschraubpositionen zwischen der Instrumententafel und der Konsole, so daß sich eine schnell und einfach durchzuführende Montage ergibt. Die Zentrierelemente gewährleisten eine optimale Lagepositionierung der Konsole und ermöglichen einen bündigen Übergang zwischen der Instrumententafel und der Konsole.

Die Maßnahme nach Anspruch 2 bietet den Vorteil, daß das Verspannen der Konsole mit besonders einfachen kostengünstigen Mitteln schnell und insbesondere auch unter Sichtkontrolle durchgeführt werden kann.

Die im Anspruch 3 gekennzeichnete Maßnahme läßt sich ohne Zuhilfenahme von zusätzlichen Bauteilen realisieren und bedarf gegenüber den herkömmlichen Baueinheiten der in Rede stehenden Art lediglich einer geringfügigen Gestaltungsänderung im Anlagebereich zwischen der Instrumententafel und der Konsole.

Der Gegenstand der Erfindung wird im folgenden anhand eines in der Zeichnung dargestellten Ausführungsbeispiels näher erläutert. Es zeigt

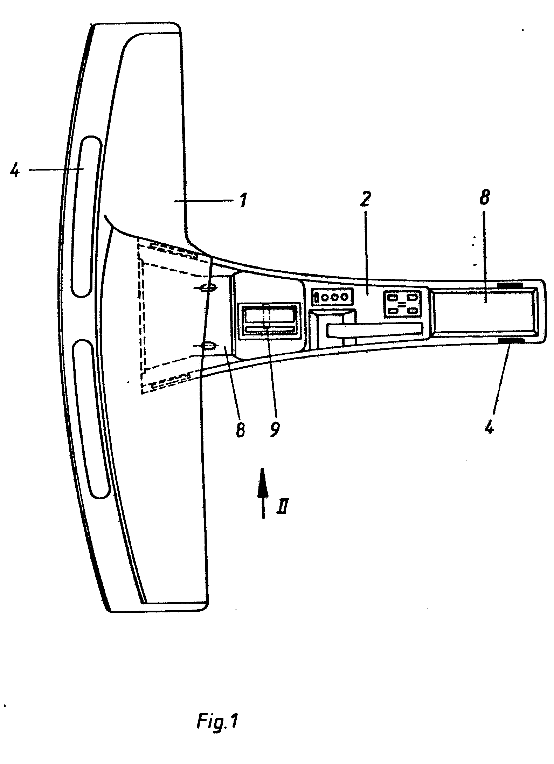

Fig. 1 eine Draufsicht auf die aus einer Instrumententafel und einer Konsole bestehenden Baueinheit,

Fig. 2 eine Teilansicht entsprechend dem Richtungspfeil II in Fig. 1 und

Fig. 3 einen Schnitt folgend der Linie III-III in Fig. 2.

Die Baueinheit besteht aus einer Instrumententafel 1 und einer Konsole 2. Die Instrumententafel 1 weist eine Hutze 3, Luftaustrittsöffnungen 4 und übliche, im einzelnen nicht dargestellte Aussparungen für die Aufnahme der ebenfalls nicht gezeigten Instrumente auf. An der Instrumententafel 1 sind unterseitig vorspringende Ansätze 5 angeformt, die mit vorspringenden Nocken 6 ausgebildet sind. Die Länge der Nocken 6 ist geringer als die der Ansätze 5.

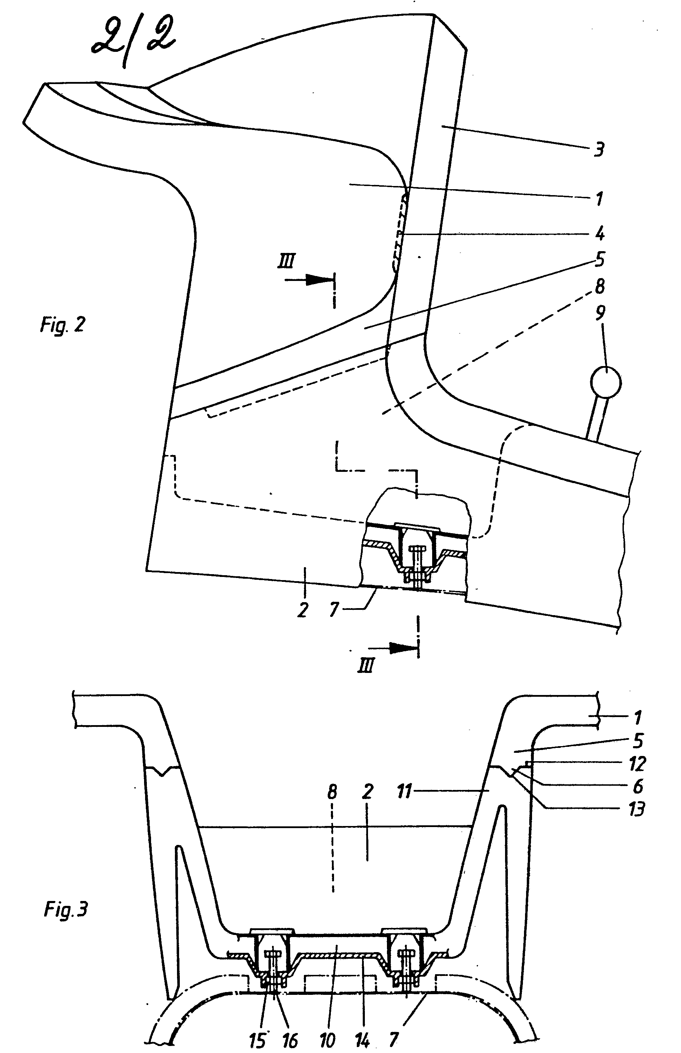

Die Konsole 2 ist an der Unterseite der Instrumententafel 1 fahrzeugmittig angeordnet und erstreckt sich in der Einbaulage in den Fahrgastraum des Fahrzeuges hinein. Wie Fig. 2 und 3 zeigen, stützt sich die Konsole 2 zum einen auf dem Bodenblech 7 der Fahrzeugkarosserie und zum anderen bereichsweise an der Instrumententafel 1 ab. Die Konsole 2 besitzt mehrere Hohlräume 8, die als Ablageschalen und zur Aufnahme von Bedienungselementen, wie z. B. einem Gangschaltungshebel 9, dienen.

Der der Instrumententafel 1 unmittelbar benachbarte Hohlraum 8 der Konsole 2 ist u. a. durch eine Bodenplatte 10 mit sich daran aufwärts erstreckenden Seitenwangen 11 begrenzt. Die freien Enden der Seitenwangen 11 bilden Anlageflächen 12, die an den freien Enden der Ansätze 5 der Instrumententafel 1 zur Anlage gelangen. Die Anlageflächen 12 weisen Aussparungen 13 zur formschlüssigen Aufnahme der Nocken 6 auf.

In der Bodenplatte 10 ist ein Träger 14 aus formstabilem Material eingelassen, der zwei Schraubenmuttern 15 haltert. Die Schraubenmuttern 15 nehmen Stellschrauben 16 auf, die sich mit ihren freien Enden auf dem Bodenblech 7 der Fahrzeugkarosserie abstützen.

Bei der Montage wird zunächst die Instrumententafel 1 in üblicher Weise an der Fahrzeugkarosserie befestigt; als dann wird die Konsole 2 mit einem Endbereich unter die Instrumententafel 1 gesetzt und durch Drehen der Stellschrauben 16 zwischen Bodenblech 7 und Instrumententafel 1 verspannt. Die Lagepositionierung der Konsole 2 wird dabei durch die ineinandergreifenden Zentrierelemente, nämlich Aussparungen 13 und Nocken 6 gewährleistet.

## Patentansprüche

1. Baueinheit für den Innenbereich eines Fahrzeuges, bestehend aus einer unterhalb der Windschutzscheibe an der Fahrzeugkarosserie zu befestigenden Instrumententafel (1) und einer daran unterseitig, vorzugsweise fahrzeugmittig angeordneten, in den Fahrgastraum hinein vorgezogenen und auf dem Bodenblech (7) der Fahrzeugkarosserie abstützbaren Konsole (2), die zumindest einen als Ablageschale und/oder zur Aufnahme von Bedienungselementen, wie z. B. Gangschaltungshebel (9), Handbremse od. dgl. dienenden Hohlraum (8) aufweist, gekennzeichnet durch eine an der Konsole (2) angeordnete Verstelleinrichtung (15, 16) zum Verspannen der Konsole (2) zwischen der Instrumententafel (1) und dem Bodenblech (7) und durch an der Instrumententafel (1) und an der Konsole (2) ineinandergreifend angeordnete Zentrierelemente (6, 13).

2. Baueinheit nach Patentanspruch 1, dadurch gekennzeichnet, daß die Verstelleinrichtung aus zumindest einer Stellschraube (16) besteht, die in einer in der Konsole (2) eingelagerten Schraubenmutter (15) eingedreht und mit ihrem freien Ende auf dem Bodenblech (7) abstützbar ist.

3. Baueinheit nach Patentanspruch 1 oder 2, dadurch gekennzeichnet, daß die Zentrierelemente aus Nocken (6) und diese aufnehmende Aussparungen (13) bestehen.

## Claims

1. A modular unit for the interior of a vehicle, the unit comprising an instrument panel (1) fastenable underneath the windscreen to the vehicle body and a console (2) which is arranged at the panel's lowermost surface, preferably so as to be disposed mid-way of the vehicle width, the length of which is such as to extend some distance into the interior of the vehicle, which is supportable on the bottom plate (7) of the vehicle body and which is provided with at least one opening (8) serving as a storage tray and/or as an accommodation for a control element, for example a gear lever (9), a hand brake or the like, characterised by a setting mechanism (15, 16) serving to brace the console (2) between the instrument panel (1) and the bottom plate (7) and by centering elements (6, 13) provided on the instrument panel (1) and on the console (2) and arranged to interlock.

2. A modular unit according to claim 1 characterised in that the setting mechanism comprises at least one adjusting screw (16) which is screwed into and through a nut (15) mounted in the console (2) and the free end of which is supportable in the bottom plate (7).

3. A modular unit according to claim 1 or claim 2 characterised in that the centering elements are projections (6) and recesses (13) engaging said projections.

## Revendications

1. Unité modulaire destinée à l'intérieur d'un véhicule automobile, constitué par un tableau de bord (1) qui doit être fixé à la carrosserie du véhicule au-dessous du parebrise, ainsi qu'une console (2) disposée sous le tableau de bord, de préférence au centre du véhicule, se prolongeant à l'intérieur de l'habitacle destiné aux passagers et s'appuyant sur la tôle de fond (7) de la carrosserie du véhicule, et qui comprend au moins un espace creux (8) servant de réceptacle pour y disposer des objets et/ou y fixer des éléments de service tels qu'un levier de changement de vitesses (9), un frein à main ou analogues, caractérisée par un dispositif de fixation (15, 16) prévu sur la console (2) et destiné à fixer la console (2) entre le tableau de bord (1) et la tôle de fond (7), ainsi que par des éléments de centrage (6, 13) prévus pour pénétrer les uns dans les autres sur le tableau de bord (1) et sur la console (2).

2. Unité modulaire selon la revendication 1, caractérisée en ce que le dispositif de fixation est constitué par au moins une vis de fixation (16) qui se visse dans un écrou (15) prévus dans la console (2) et qui s'appuie par son extrémité libre contré la tôle de fond (7).

3. Unité modulaire selon la revendication 1 ou 2, caractérisée en ce que les élements de centrage sont constitués par des saillies (6) et par des évidements (13) dans lesquels pénètrent ces dernières.

Fig.1

2/2

Fig. 2

Fig. 3